# FASCICULE DE BREVET EUROPEEN

(11) **EP 1 634 787 B1**
(45) Date de publication et mention de la délivrance du brevet: **23.05.2007**
(21) Numéro de dépôt: 05018680.8
(22) Date de dépôt: 29.08.2005
(51) Int. Cl.: B60T 8/48

(54) **Dispositif de freinage pour véhicule automobile**
Kraftfahrzeugbremsvorrichtung
Braking device for a motor vehicle

(30) Priorité: 08.09.2004 FR 0409542
(43) Date de publication de la demande: 15.03.2006
(73) Titulaire: ROBERT BOSCH GMBH, 70442 Stuttgart (DE)
(72) Inventeur: Marlhe, Nicolas, 95670 Marly la Ville (FR); Leboube, Christophe, 77680 Roissy en Brie (FR); Durand, Etienne, 75014 Paris (FR); Piel, Jean-Marc, 93190 Livry Gargan (FR)
(74) Mandataire: Hurwic, Aleksander Wiktor

(56) Documents cités:
- WO-A-00/05117
- WO-A-01/14193
- DE-A1- 4 430 168
- FR-A- 2 756 797

## Description

L'invention concerne un dispositif de freinage pour véhicule automobile, comprenant un premier circuit de freinage commandé par le conducteur du véhicule et un second circuit de freinage commandé par un calculateur programmé.

Le premier circuit de freinage comprend un maître-cylindre commandé par une pédale de frein en général par l'intermédiaire d'un servomoteur d'assistance pneumatique, et le second circuit de freinage comprend au moins une pompe entraînée par un moteur électrique et alimentée en liquide de frein à partir du maître-cylindre. Les conduits de sortie du maître-cylindre et de la pompe précitée sont reliés à des freins de roues par des circuits comportant des électrovannes commandées par le calculateur.

En fonctionnement normal, les électrovannes qui relient les sorties du maître-cylindre aux freins de roues sont ouvertes par le calculateur et les freins de roues sont alimentés en liquide de frein sous pression par le maître-cylindre du premier circuit de freinage sous commande du conducteur qui appuie sur la pédale de frein. Pendant ce fonctionnement normal, il peut arriver qu'un ordre de freinage soit généré par le calculateur qui reçoit des signaux de consigne d'un logiciel par exemple du type ESP (Electronic Stability Program) ou ACC (Active Cruise Control).

Dans ce cas, les électrovannes de liaison du premier circuit de freinage aux freins de roues sont fermées. Parce que la pression dans le second circuit de freinage est élevée, une action du conducteur sur la pédale de frein va se traduire par un déplacement très faible et tout à fait inhabituel de cette pédale qui risque de perturber et d'inquiéter le conducteur.

L'invention a pour but d'apporter une solution simple, efficace et économique à ce problème.

Elle propose, à cet effet, un dispositif de freinage pour véhicule automobile, comprenant un premier circuit de freinage comportant un maître-cylindre commandé par une pédale de frein et dont les sorties sont reliées à des freins de roues par des moyens de liaison commandés par un calculateur programmé, un second circuit de freinage comprenant au moins une pompe alimentée depuis le maître-cylindre pour alimenter les freins de roues sous commande du calculateur, des moyens de simulation de course de pédale, associés au premier circuit de freinage et permettant un déplacement de la pédale quand les moyens de liaison précités sont fermés par le calculateur, les moyens de simulation de course comprenant une électrovanne qui est montée dans un conduit contenant un fluide hydraulique et relié à une chambre de stockage de fluide hydraulique et qui est commandée en ouverture par le calculateur pour permettre le passage du fluide hydraulique vers ladite chambre de stockage quand la pédale de frein est actionnée par le conducteur, caractérisé par le fait que le conduit comportant l'électrovanne est relié à un autre conduit dans lequel du fluide hydraulique est déplacé par une partie d'une tige de commande agencée entre la pédale de frein et une autre partie de tige de commande associée au maître-cylindre ou à un servomoteur d'assistance pneumatique.

Dans le dispositif de freinage selon l'invention, le simulateur de course peut être mis en service de façon simple, fiable et avec des moyens peu coûteux chaque fois que le second circuit de freinage est rendu actif. Si le conducteur appuie alors sur la pédale de frein, il a à peu près les mêmes sensations que dans le cas où le premier circuit de freinage est actif, et n'est donc pas perturbé.

Selon une caractéristique avantageuse de l'invention, la chambre de stockage de fluide hydraulique contient un piston sollicité par un ressort de rappel dans le sens repoussant le fluide hydraulique à l'extérieur de la chambre.

Dans une variante de réalisation, le conduit comportant l'électrovanne peut être monté en parallèle sur une chambre qui contient du fluide hydraulique et un piston déplaçable dans cette chambre par une première partie de tige de commande associée à la pédale de frein.

Dans ce cas, le piston précité est sollicité dans ladite chambre par un ressort de rappel dans une direction qui est opposée à la direction de déplacement du piston par la première partie de tige de commande en cas d'appui sur la pédale de frein.

Dans une autre variante de réalisation, la tige de commande associée à la pédale de frein est du type télescopique et comprend deux parties de tige pouvant coulisser l'une dans l'autre, les moyens de simulation de course se trouvant à la jonction entre les deux parties de tige de commande.

Une première partie de tige de commande est associée à la pédale de frein et est montée coulissante en étanchéité dans une chambre axiale qui est formée dans l'autre partie de tige de commande et qui est remplie de fluide hydraulique, cette chambre communiquant par un conduit comportant l'électrovanne précitée avec une autre chambre contenant un piston sollicité par un ressort de rappel dans une direction tendant à repousser le fluide hydraulique en dehors de cette autre chambre.

Avantageusement, les deux chambres citées ci-dessus et le conduit de liaison comportant l'électrovanne sont logés dans la seconde partie de tige de commande.

Dans tous ces modes de réalisation, l'électrovanne précitée est commandée en tout ou rien par le calculateur.

L'invention sera mieux comprise et d'autre caractéristiques, détails et avantages de celle-ci apparaîtront plus clairement à la lecture de la description qui suit, faite à titre d'exemple en référence aux dessins annexés dans lesquels :
- La figure 1 représente schématiquement un dispositif de freinage selon l'invention ;
- La figure 2 est une vue schématique à plus grande échelle d'une partie du dispositif de la figure 1 et représente la liaison d'un simulateur de course de pédale à un conduit contenant un fluide hydraulique ;
- Les figures 3 et 4 sont des vues schématiques partielles correspondant à la figure 2 et représentent des variantes de réalisation de l'invention ;

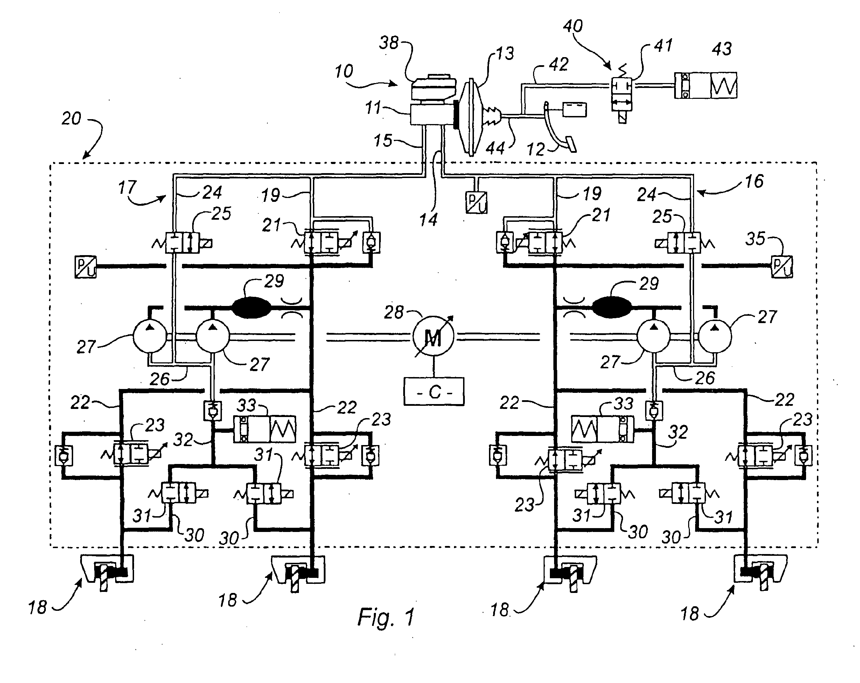

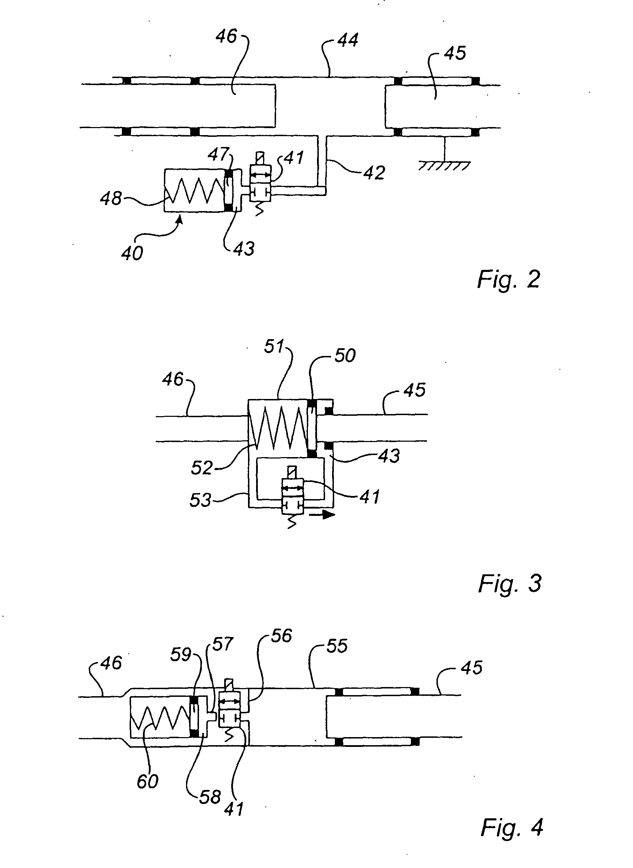

On se réfère d'abord aux figures 1 et 2, qui représentent schématiquement un premier mode de réalisation d'un dispositif de freinage selon l'invention.

Ce dispositif de freinage comprend un premier circuit de freinage 10 commandé par le conducteur du véhicule et un second circuit de freinage 20 du type électrohydraulique, commandé par un calculateur programmé C dont les liaisons électriques avec divers éléments du dispositif de freinage n'ont pas été représentées, pour simplifier le dessin et faciliter sa compréhension.

Le premier circuit de freinage 10 comprend un maître-cylindre 11 tel qu'un maître-cylindre tandem, commandé à partir d'une pédale de frein 12 actionnée par le conducteur du véhicule, la pédale de frein 12 étant reliée par une tige de commande à un servomoteur d'assistance pneumatique 13, d'une façon bien connue de l'homme du métier.

Le maître-cylindre tandem 11 comprend une chambre primaire et une chambre secondaire dont les sorties 14, 15 sont reliées par des circuits 16, 17 à des freins 18 équipant les roues du véhicule.

Les deux circuits 16, 17 sont identiques, l'un permettant d'alimenter les freins des roues avant, l'autre les freins des roues arrière.

Chaque circuit 16, 17 comporte un conduit 19 équipé d'une électrovanne d'arrêt 21 commandée par le calculateur C et relié par s on extrémité amont à une conduite de sortie 14, 15 du maître-cylindre 11 et par son extrémité aval à deux conduits 22 menant à des freins de roues 18, chaque conduit 22 comportant une électrovanne 23 commandée en ouverture et en fermeture par le calculateur C.

Chaque circuit 16, 17 comprend un autre conduit 24 équipé d'une électrovanne 25 commandée par le calculateur C, l'extrémité amont de ce conduit 24 étant reliée à une conduite de sortie 14, 15 du maître-cylindre et son extrémité aval à un conduit 26 d'alimentation de pompes 27 qui sont entraînées en rotation par exemple par un même moteur électrique 28 et dont les sorties sont reliées à l'entrée d'un accumulateur de pression 29 dont la sortie est branchée sur le conduit précité 19 d'alimentation des deux freins de roues 18 correspondants.

Le retour du liquide de frein, après un freinage, vers le maître-cylindre s'effectue au moyen de conduits 30 qui sont branchés sur les conduits 22 d'alimentation des freins de roues au voisinage de ces derniers et qui sont équipés d'électrovalves 31 commandées par le calculateur C, ces conduits 30 étant réunis par un conduit commun 32 au conduit 26 d'alimentation des pompes 27.

Un accumulateur de pression 33 formant amortisseur est branché sur le conduit 32 précité.

De façon bien connue de l'homme du métier, des clapets anti-retour sont montés en parallèle sur les électrovannes 21 et 23 précitées. Un clapet anti-retour est également monté dans la liaison du conduit 32 au conduit 26 d'alimentation des pompes 27 comme indiqué.

Un capteur de pression 35 est branché sur le conduit 19 en aval de l'électrovanne d'arrêt 21 et fournit un signal de pression de liquide au calculateur C.

Ce calculateur, le moteur électrique 28 et les pompes 27, constituent le second circuit de freinage 20 qui a été délimité par un cadre en traits interrompus dans la représentation schématique de la figure 1.

En fonctionnement normal, les freins de roues 18 sont actionnés par le conducteur qui appuie sur la pédale de frein 12, les électrovannes 2 1 étant ouvertes et les électrovannes 25 fermées, le second circuit de freinage 20 étant inactif.

Quand le second circuit 20 devient actif, au moins un frein de roue 18 est actionné par le second circuit 20 sous commande du calculateur C qui reçoit des signaux de consigne d'un logiciel du type ESP ou ACC par exemple.

Dans cet état de fonctionnement, les électrovannes d'arrêt 21 sont fermées et le premier circuit de freinage 10 est isolé des freins de roues 18. Les électrovannes 25 équipant les conduits 24 sont ouvertes et les pompes 27 sont alimentées en liquide de frein par aspiration dans un réservoir 38 monté sur le maître-cylindre 11.

Quand le second circuit de freinage 20 est actif, le conducteur du véhicule qui exerce un appui sur la pédale de frein 12 ne peut pas déplacer celle-ci après rattrapage des courses mortes, en raison de la fermeture des électrovannes 21 et de la pression régnant dans les circuits d'alimentation des freins de roues 18.

Pour que le conducteur ne soit pas gêné par cette sensation inhabituelle, un simulateur de course de pédale 40 est associé au premier circuit de freinage 10 et comporte, comme on le voit mieux en figure 2, une électrovanne 41 montée dans un conduit 42 rempli de fluide hydraulique et dont une extrémité débouche dans une chambre 43 de stockage de fluide hydraulique, l'autre extrémité du conduit 42 étant reliée à un conduit cylindrique fixe 44 contenant du fluide hydraulique dans un espace délimité par deux pistons dont l'un est formé par l'extrémité d'une première partie 45 de tige de commande reliée à la pédale de frein 12 et dont l'autre est formée par l'extrémité d'une seconde partie 46 de tige de commande associée à un piston du servomoteur d'assistance pneumatique 13.

Le fluide hydraulique contenu dans les conduits 42 et 44 et dans la chambre 43 peut être du liquide de frein ou un autre liquide approprié.

La chambre 43 de stockage comporte un piston 47 monté coulissant de façon sensiblement étanche à l'intérieur de cette chambre et sollicité en permanence par un ressort 48 de rappel vers l'entrée de cette chambre pour s'opposer à l'entrée du fluide hydraulique dans la chambre.

Lorsque l'électrovanne 41 est dans la position de fermeture représentée aux figures 1 et 2, le fluide hydraulique contenu dans les conduits 42 et 44 ne peut pénétrer dans la chambre 43 et, réciproquement, le fluide hydraulique contenu dans la chambre 43 ne peut s'écouler dans les conduits 42 et 44.

Si le conducteur appuie alors sur la pédale de frein 12, l'effort est transmis par la première partie de tige 45 à la seconde partie de tige 46 qui, si les électrovannes 21 sont en position ouverte, va provoquer une augmentation de pression dans les circuits d'alimentation des freins de roues 18 et commander le serrage de ces freins. Si les électrovannes 21 sont en position fermée, le déplacement des parties de tige 45 et 46 est nul ou très faible.

Si l'électrovanne 41 est en position ouverte, toute action du conducteur sur la pédale de frein 12 va se traduire par un déplacement de la partie de tige 45 vers l'autre partie de tige 46 et par une entrée de fluide hydraulique dans la chambre 43, cette entrée ayant lieu jusqu'à ce que la force exercée par le ressort 48 sur le piston 47 équilibre la force appliquée par le fluide hydraulique à ce piston.

Les sensations ressenties par le conducteur lorsqu'il appuie sur la pédale de frein 12 sont alors sensiblement les mêmes que si les freins de roues 18 étaient serrés par le premier circuit de freinage 10.

Quand les électrovannes 21 sont ouvertes par le calculateur C pour un freinage du véhicule commandé par le premier circuit 10, l'électrovanne 41 du simulateur de course est fermée et la présence du simulateur ne nuit pas à l'efficacité du premier circuit de freinage.

Dans la variante de réalisation de la figure 3, l'extrémité de la première partie de tige de commande 45 reliée à la pédale de frein 12 porte un piston 50 qui est déplaçable en translation de façon sensiblement étanche dans une chambre 51 à l'encontre de l'action d'un ressort de rappel 52 monté entre le piston 50 et l'extrémité de la chambre 51 située du côté opposé à la première partie de tige 45. La seconde partie de tige 46 s'étend depuis la chambre 51 en direction du servomoteur 13.

L'électrovanne 41 commandée par le calculateur est montée dans un conduit 53 dont les extrémités débouchent aux extrémités de la chambre 51, de part et d'autre du piston précité 50.

Dans ce cas, la chambre de stockage 43 précitée est formée par la partie du conduit 53 qui relie l'électrovanne 41 à la partie de la chambre 51 dans laquelle rentre la première partie 45 de la tige de commande, et par la partie de la chambre 51 comprise entre le piston 50 et l'orifice de passage de la partie de tige 45.

Ainsi, quand l'électrovanne 41 est en position fermée comme représenté, tout effort exercé par le conducteur sur la pédale de frein 12 est transmis de la première partie 45 à la seconde partie 46 de la tige de commande. Quand l'électrovanne 41 est en position ouverte et que la seconde partie 46 de la tige de commande est sensiblement immobilisée en position du fait de la fermeture des électrovannes 21, l'action du conducteur sur la pédale 12 se traduit par un déplacement du piston 50 vers la seconde partie de tige 46 et par une compression du ressort 52, le liquide circulant dans le conduit 53 d'une extrémité à l'autre de la chambre 51, dans le sens indiqué par la flèche.

Les sensations ressenties par le conducteur correspondent alors à celles d'un freinage normal.

Dans la variante de réalisation de la figure 4, la tige de commande reliant la pédale de frein 12 au servomoteur 13 comprend une première partie 45 de tige reliée à la pédale de frein 12 et montée axialement coulissante de façon étanche dans l'extrémité évasée de la seconde partie 46 de la tige de commande. Un fluide hydraulique, par exemple du liquide de frein, remplit la chambre 55 qui est délimitée dans la partie d'extrémité évasée de la seconde partie 46 de la tige de commande, par l'extrémité de la première partie 45 de la tige et par une paroi transversale 56 comportant un conduit 57 équipé d'une électrovanne 41. Ce conduit 57 débouche dans une autre chambre 58 logée à l'intérieur de la partie d'extrémité évasée de la seconde partie 46 de la tige de commande.

La chambre 58 comprend, comme la chambre 43 de la figure 2, un piston 59 monté coulissant de façon étanche dans la chambre et sollicité en permanence par un ressort de rappel 60 vers l'entrée de cette chambre.

Quand l'électrovanne 41 est en position fermée comme représenté, tout effort exercé par le conducteur sur la pédale de frein 12 est transmis intégralement par la première partie 45 de la tige de commande et le liquide remplissant la chambre 55 à la seconde partie 46 de la tige de commande.

Quand l'électrovanne 41 est ouverte et que la seconde partie 46 de la tige de commande est sensiblement bloquée du fait de la fermeture des électrovannes 21 précitées, une action du conducteur sur la pédale de frein 12 se traduit par un déplacement de la première partie 45 de la tige de commande vers la seconde partie 46 de cette tige, par une entrée de liquide dans la chambre 58, par un déplacement correspondant du piston 59 et par une compression du ressort de rappel 60.

Les sensations ressenties par le conducteur sont alors sensiblement celles d'un freinage normal.

Les électrovannes 41 des modes de réalisation des figures 1 à 4 sont commandées en tout ou rien par le calculateur C et sont donc soit en position ouverte, soit en position fermée.

## Revendications

1. Dispositif de freinage pour véhicule automobile, comprenant un premier circuit de freinage (10) comportant un maître-cylindre (11) commandé par une pédale de frein (12) et dont les sorties (14, 15) sont reliées à des freins de roues (18) par des moyens de liaison (21, 23, 25) commandés par un calculateur programmé (C), un second circuit de freinage (20) comprenant au moins une pompe (27) alimentée depuis le maître-cylindre (11) pour alimenter les freins de roues (18) sous commande du calculateur (C), et des moyens (40) de simulation de course de pédale associés au premier circuit de freinage (10) et permettant un déplacement de la pédale (12) quand les moyens de liaison (21) précités sont fermés, les moyens de simulation de course (40) comprenant une électrovanne (41) qui est montée dans un conduit (42) contenant un fluide hydraulique et relié à une chambre (43) de stockage de fluide hydraulique et qui est commandée en ouverture par le calculateur (C) pour permettre le passage du fluide hydraulique vers ladite chambre de stockage quand la pédale de frein est actionnée par le conducteur **caractérisé en ce que** le conduit (42) comportant l'électrovanne (41) est relié à un autre conduit (44) dans lequel du fluide hydraulique est déplacé par une partie (45) d'une tige de commande agencée entre la pédale de frein (12) et une autre partie (46) de tige de commande associée au maître-cylindre (11) ou à un servomoteur d'assistance pneumatique.

2. Dispositif selon la revendication 1, **caractérisé en ce que** ladite chambre de stockage (43) contient un piston (47) sollicité par un ressort de rappel (48) dans le sens repoussant le fluide hydraulique à l'extérieur de la chambre (43).

3. Dispositif selon l'une des revendications précédentes, **caractérisé en ce que** le conduit (53) comportant l'électrovanne (41) est monté en parallèle sur une chambre (51) contenant du fluide hydraulique et un piston (50) déplaçable dans la chambre (51) par une première partie (45) de tige de commande associée à la pédale de frein (12).

4. Dispositif selon la revendication 3, **caractérisé en ce que** le piston (50) est sollicité dans la chambre (51) par un ressort de rappel (52) dans la direction opposée à la direction de déplacement du piston (50) par la première partie (45) de tige de commande en cas d'appui sur la pédale de frein (12).

5. Dispositif selon l'une des revendications 1 à 2, **caractérisé en ce que** la tige de commande associée à la pédale de frein (12) comprend deux parties de tige (45, 46) pouvant coulisser l'une dans l'autre, et **en ce que** les moyens de simulation de course se trouvent à la jonction entre les deux parties (45, 46) de tige de commande.

6. Dispositif selon la revendication 5, **caractérisé en ce qu'**une première partie de tige de commande (45) associée à la pédale de frein (12) est montée coulissante à étanchéité dans une chambre axiale (55) formée dans la seconde partie (46) de tige de commande et remplie de fluide hydraulique, cette chambre (55) communiquant par un conduit (57) comportant l'électrovanne (41) précitée avec une autre chambre (58) contenant un piston (59).sollicité par un ressort de rappel (60) dans le sens tendant à repousser le fluide hydraulique en dehors de ladite autre chambre (58).

7. Dispositif selon la revendication 6, **caractérisé en ce que** les deux chambres (55, 58) et leur conduit de liaison (57) comportant l'électrovanne (41) sont logés dans ladite autre partie (46) de tige de commande.

8. Dispositif selon l'une des revendications précédentes, **caractérisé en ce que** l'électrovanne (41) est commandée en tout ou rien par le calculateur (C).

## Claims

1. Braking device for a motor vehicle, comprising a first brake circuit (10), which includes a master cylinder (11) controlled by a brake pedal (12), the outlets (14, 15) of said master cylinder being connected to wheel brakes (18) via connection means (21, 23, 25) controlled by a programmed computer (C), a second brake circuit (20), which includes at least one pump (27) supplied from the master cylinder (11) in order to supply the wheel brakes (18) under control of the computer (C), and pedal travel simulation means (40) associated with the first brake circuit (10) and allowing displacement of the pedal (12) when the aforementioned connection means (21) are closed, the travel simulation means (40) comprising a solenoid valve (41) which is mounted in a pipe (42) containing a hydraulic fluid and connected to a hydraulic fluid storage chamber (43), said solenoid valve being controlled by the computer (C) so as to open in order to allow the hydraulic fluid to flow toward said storage chamber when the brake pedal is actuated by the driver, **characterized in that** the pipe (42) that includes the solenoid valve (41) is connected to another pipe (44) in which hydraulic fluid is displaced by a part (45) of a control rod provided between the brake pedal (12) and another part (46) of the control rod associated with the master cylinder (11) or with a pneumatic brake booster.

2. Device according to claim 1, **characterized in that** said storage chamber (43) contains a piston (47) urged by a return spring (48) in the direction in which the hydraulic fluid is pushed out of the chamber (43).

3. Device according to either of the preceding claims, **characterized in that** the pipe (53) that includes the solenoid valve (41) is mounted in parallel on a chamber (51) containing hydraulic fluid and a piston (50) that can move in the chamber (51) by a first control rod part (45) associated with the brake pedal (12).

4. Device according to claim 3, **characterized in that** the piston (50) is urged into the chamber (51) by a return spring (52) in the opposite direction to the direction of displacement of the piston (50) by the first control rod part (45) should the brake pedal (12) be applied.

5. Device according to either of claims 1 and 2, **characterized in that** the control rod associated with the brake pedal (12) comprises two rod parts (45, 46), one of which can slide in the other, and **in that** the travel simulation means are located at the junction between the two control rod parts (45, 46).

6. Device according to claim 5, **characterized in that** a first control rod part (45) associated with the brake pedal (12) is sealingly mounted so as to slide in an axial chamber (55) formed in the second control rod part (46) and filled with hydraulic fluid, this chamber (55) communicating via a pipe (57) which includes the aforementioned solenoid valve (41), with another chamber (58) containing a piston (59) urged by a return spring (60) in the direction tending to push the hydraulic fluid out of said other chamber (58).

7. Device according to claim 6, **characterized in that** the two chambers (55, 58) and their connecting pipe (57) that includes the solenoid valve (41) are housed in said other control rod part (46).

8. Device according to one of the preceding claims, **characterized in that** the solenoid valve (41) is controlled in an on/off manner by the computer (C).

## Patentansprüche

1. Bremsvorrichtung für ein Kraftfahrzeug, mit einem ersten Bremskreis (10), der einen von einem Bremspedal (12) gesteuerten Hauptzylinder (11) aufweist und bei dem die Ausgänge (14, 15) über von einem programmierten Rechner (C) gesteuerte Verbindungsmittel (21, 23, 25) mit Radbremsen (18) verbunden sind, mit einem zweiten Bremskreis (20), der mindestens eine Pumpe (27) aufweist, die ausgehend vom Hauptzylinder (11) gespeist wird, um die Radbremsen (18) unter der Steuerung des Rechners (C) zu speisen, und mit Mitteln (40) zur Simulation des Pedalwegs, die dem ersten Bremskreis (10) zugeordnet sind und eine Verlagerung des Pedals (12) ermöglichen, wenn die oben genannten Verbindungsmittel (21) geschlossen sind, wobei die Wegsimulationsmittel (40) ein Magnetventil (41) aufweisen, das in einer Leitung (42) angebracht ist, die ein Hydraulikfluid enthält und mit einer Kammer (43) zur Speicherung von Hydraulikfluid verbunden ist, und dessen Öffnen von dem Rechner (C) gesteuert wird, um das Strömen des Hydraulikfluids zur Speicherkammer zu ermöglichen, wenn das Bremspedal von dem Fahrer betätigt wird, **dadurch gekennzeichnet, dass** die das Magnetventil (41) aufweisende Leitung (42) mit einer weiteren Leitung (44) verbunden ist, in der Hydraulikfluid durch einen Teil (45) einer Steuerstange verdrängt wird, der zwischen dem Bremspedal (12) und einem anderen Steuerstangenteil (46) angeordnet ist, welcher dem Hauptzylinder (11) oder einem pneumatischen Unterstützungsservomotor zugeordnet ist.

2. Vorrichtung nach Anspruch 1, **dadurch gekennzeichnet, dass** die Speicherkammer (43) einen Kolben (47) enthält, der von einer Rückstellfeder (48) in die Richtung beaufschlagt wird, in der das Hydraulikfluid aus der Kammer (43) herausgedrängt wird.

3. Vorrichtung nach einem der vorhergehenden Ansprüche, **dadurch gekennzeichnet, dass** die das Magnetventil (41) aufweisende Leitung (53) mit einer Kammer (51), die Hydraulikfluid enthält, und einem Kolben (50) parallel geschaltet ist, welcher über einen ersten Steuerstangenteil (45), der dem Bremspedal (12) zugeordnet ist, in der Kammer (51) verlagert werden kann.

4. Vorrichtung nach Anspruch 3, **dadurch gekennzeichnet, dass** der Kolben (50) in der Kammer (51) von einer Rückstellfeder (52) in die Richtung beaufschlagt wird, die zur Verlagerungsrichtung des Kolbens (50) durch den ersten Steuerstangenteil (45) entgegengesetzt ist, wenn das Bremspedal (12) gedrückt wird.

5. Vorrichtung nach einem der Ansprüche 1 bis 2, **dadurch gekennzeichnet, dass** die dem Bremspedal (12) zugeordnete Steuerstange zwei Stangenteile (45, 46) aufweist, die ineinander gleiten können, und dass sich die Wegsimulationsmittel an der Verbindungsstelle zwischen den beiden Steuerstangenteilen (45, 46) befinden.

6. Vorrichtung nach Anspruch 5, **dadurch gekennzeichnet, dass** ein erster Steuerstangenteil (45), der dem Bremspedal (12) zugeordnet ist, in dichter Weise gleitend in einer axialen Kammer (55) angebracht ist, die im zweiten Steuerstangenteil (46) ausgebildet und mit Hydraulikfluid gefüllt ist, wobei diese Kammer (55) über eine Leitung (57), die das oben genannte Magnetventil (41) aufweist, mit einer weiteren Kammer (58) verbunden ist, die einen Kolben (59) enthält, der von einer Rückstellfeder (60) in die Richtung beaufschlagt wird, die dazu neigt, das Hydraulikfluid aus der weiteren Kammer (58) herauszudrängen.

7. Vorrichtung nach Anspruch 6, **dadurch gekennzeichnet, dass** die beiden Kammern (55, 58) und ihre Verbindungsleitung (57), die das Magnetventil (41) aufweist, im anderen Steuerstangenteil (46) angeordnet sind.

8. Vorrichtung nach einem der vorhergehenden Ansprüche, **dadurch gekennzeichnet, dass** das Magnetventil (41) von dem Rechner (C) nach dem alles oder nichts-Prinzip gesteuert wird.
